# EUROPEAN PATENT APPLICATION

(11) **EP 1 668 989 A1**
(43) Date of publication of application: **14.06.2006**
(21) Application number: 05112010.3
(22) Date of filing: 13.12.2005
(51) Int. Cl.: A23C 9/137, A23C 9/154

(54) **Dairy particles containing at least one dairy product, a dairy-based product containing such dairy particles and a process for the preparation of such dairy particles**

(30) Priority: 13.12.2004 NL 1027732
(71) Applicant: Campina Nederland Holding B.V., 5301 LB Zaltbommel (NL)
(72) Inventor: Kloek, William, 5467 BR, Veghel (NL); Musters-Van Beusekom, Julia Theresa, 1273 KR, Huizen (NL)
(74) Representative: van Westenbrugge, Andries

(57) **Abstract**

Dairy particles containing at least one dairy product, characterised in that there is at least one gelling agent in the dairy particles and the dairy particles are in solid form at a temperature above 0 °C, a dairy-based product containing such dairy particles as well as a process for the preparation of such dairy particles are described.

## Description

This invention relates to dairy particles containing at least one dairy product, a dairy-based product containing such dairy particles and a process for the preparation of such dairy particles.

US Patent 5 126 156 describes a method for the preparation of a frozen dairy product wherein a dairy composition is frozen in particles. This gives rise to a free-flowing frozen ice cream product. However, such dairy particles do not remain solid at temperatures above 0 °C.

Gelling agents are often used in order to be able to manufacture food products which also retain their shape at these temperatures.

In EP-A 1 502 510, filed on 16 December 2003, for instance, an accelerated method is described for making, for example, cheese cake by replacing conventional gelatine with a polysaccharide gelling agent. The gelling agent is heated, shaped and then set, in the refrigerator, for example, with pieces of fruit, nuts, sugar, etc.

US 5 009 867 relates to a pizza kit consisting of gelled pizza sauce, cheese and pizza base. Here too cooling takes place in the normal way, in the air.

According to the abstract of JP-A 01039956 a gelling agent is used to prepare a cheese-like jelly by melting cheese in water, adding gelling agent and other components and then cooling again.

Besides the use of gelling agents for semi-solid or solid products of this type, the principle of gelling is also applied in the art to generally liquid dairy products.

According to the abstract of JP-A 60241846, a gelled yoghurt can be prepared from an emulsion of a fermented milk, an emulsifier, an oil and a gelling agent, the shaping taking place in a mould.

US 4 427 704 describes a method for gelling a food with glucomannan and carragheenan. By controlling the pH, either a thermo-reversible or -irreversible gel is obtained. Gelled chocomilk, obtained by mixing milk and gelling agent at 85 °C and then allowing it to cool in a bowl at room temperature for 2 to 3 hours, may be mentioned as an example.

US 5 112 964 provides a method for producing a water-soluble hemicellulose, the method comprising a starch removal step, an extraction step, a neutralising step and a desalinating step. Milk and guar gum, for example, are mixed at a raised temperature, after which this mixture is concentrated to produce a powder. Granules of this are then obtained using a granulator.

US 6 627 236 relates to a method for making dairy product capsules by dripping a dairy product, e.g. yoghurt, into an aqueous solution of a low-molecular weight alginate, lightly acetylated gellan or lightly esterified pectin. In this way the dairy product is coated to reduce syneresis. However, this results in dairy particles coated with a layer of gel with a fluid core, comparable to a capsule, which do retain their shape above 0 °C, but from which fluid leaks when they are cut though. A cross-section of these particles does not show a homogeneous structure.

In the dairy industry there is always a need for new products and products with new properties as regards structure, texture and composition, so as to extend the range of dairy products which can be produced economically.

The aim of this invention is to provide a novel product in the dairy industry, namely dairy particles, which offer interesting novel possibilities, such as a new feel in the mouth and a new appearance, and which can also be incorporated as a dispersed phase into a dairy-based product (as a continuous phase) in order to be differentiated in this as far as, for example, the sensation of colour, taste and/or texture is concerned, so that a surprising new dairy-based product is obtained. It has been found that homogenous dairy particles which retain their shape can be produced by mixing a dairy product at high temperature with a gelling agent and then cooling it quickly, preferably by dripping or injecting it into a cooling medium.

The invention therefore relates to a process for the preparation of the dairy particles described above, comprising the following steps: (a) preparing a composition of at least one dairy product and at least one gelling agent which gels in solution on cooling; (b) bringing the composition to a temperature at which the gelling agent in solution has not gelled; (c) shaping and cooling dairy particles by bringing the composition wherein the gelling agent has not gelled into contact with a liquid cooling medium, i.e. forming particles of the composition and cooling them to a temperature at which individual dairy particles change into the solid form; and (d) recovering the dairy particles. Bringing the composition into contact with the cooling medium is preferably carried out discontinuously in step (c), so that discrete particles are formed. Bringing into contact discontinuously can be effected by injecting or dripping the composition into the cooling medium.

Dairy particles which have the desired size and can be stored for a long time in a refrigerator at a temperature of, for example, a maximum of 7 °C, are prepared in a relatively easy manner by this process. The dairy particles can also be stored at a temperature below 0 °C, preferably at a temperature in the range of -5 to -30 °C and can then still be successfully used in a dairy-based product. The process additionally has the advantage that it can be carried out in a sterile manner.

In step (a) a composition is prepared from at least one dairy product and at least one gelling agent which gels in solution on cooling. A dairy product is preferably mixed with the gelling agent, which dissolves in the dairy product, and possibly additionally added water. The gelling agent can also be dissolved in water first and added to the dairy product in dissolved form.

In step (b) the composition is brought to a temperature at which the gelling agent has not gelled in dissolved form, so that the composition is in a uniform liquid state in spite of the presence of the gelling agent.

In step (c) particles are formed from the composition and cooled to a temperature at which individual particles change into the solid form. The temperature of the liquid cooling medium is therefore lower than the gelling temperature of the gelling agent, as a result of which the particles change into the solid form by gelling. As a result of the rapid transition of the composition above the gelling point to below the gelling temperature it is, as it were, "quenched". The temperature of the cooling medium is preferably 0 °C or lower, as a result of which the particles change into the solid form by freezing or by a combination of gelling and freezing. In the latter case it may be that particles change into the solid form by freezing of the particles, but in this case the solid form of the particles is preserved by the formed or forming gel when they are brought to a temperature of higher than 0 °C, by the presence of the gelling agent, which adopts the gel form at such a temperature. It has been found that particles recovered by a combination of freezing and gelling retain their shape even better.

Depending on the desired form of the final dairy particles, bringing the composition into contact with the liquid cooling medium is preferably done discontinuously, preferably by dripping or injecting the composition into the cooling medium. In the case of globules, the particles are usually formed by dripping the composition, at a temperature at which the gelling agent in solution has not gelled, into a bath at a temperature such that the dissolved gelling agent immediately gels and/or freezes, so that the liquid particles change into a solid form in a completely or almost completely spherical shape. In the case of strings or threads the liquid composition is, for example, injected into a cooling medium, so that cylindrical particles, i.e. strings, are produced.

It is preferable for the liquid composition to be in the desired shape of the particles in a bath at a temperature at which the composition changes into solid form. This can advantageously be effected by putting the liquid composition into liquid nitrogen or a liquid oil bath at a temperature of approx. 5 °C. In this way it is easy to obtain the shape of the particles.

In step (d) the particles are recovered. This normally takes place by collecting the particles. If the particles have been prepared in a bath of liquid nitrogen or an oil bath, this recovery of the particles advantageously takes place by sieving the particles out of the bath. The particles obtained in this way can easily be stored at a temperature below 0 °C, as mentioned above, and can likewise be incorporated in the dairy-based product by adding the particles to the product in frozen state and carefully stirring them into the product.

For the reasons already mentioned above, in one embodiment of the process according to the invention, in step (c) the particles are formed by bringing the composition in the desired form into contact with a cooling medium at a temperature at which the particles change into the solid form and more preferentially at a temperature of 0 °C or lower.

In a preferred embodiment the cooling medium is liquid nitrogen, because this is an inert material, it has no effect on the taste and the reproducibility is thus very good. Moreover, a smaller quantity of gelling agent may be required if the particles are formed in liquid nitrogen, which is advantageous from the point of view of cost.

This invention also relates to dairy particles obtainable by the above process, which are characterised in that there is at least one gelling agent in the dairy particles and the dairy particles are in solid form at a temperature above 0 °C. The dairy particles differ from dairy particles obtained by normal cooling in that a cross-section of the dairy particles according to the invention shows a mainly homogeneous distribution of gelling agent, the dairy particles also retain their shape inside when cut though and no liquid leaks out when they are cut though.

It has been found that particles of this type are exceptionally suitable for incorporation as a discontinuous or dispersed phase in a dairy-based product as a continuous phase, where it can give a particular sensation of taste, colour and/or texture. An example is the incorporation of particles of custard, for example globules of custard, that, for example, have been prepared from strawberry custard and are thus sweet and pink in colour, in a sour, white-coloured product such as yoghurt. The consumer can detect the sweet taste localised in the sour product and, moreover, the pink particles that are incorporated in the white-coloured product give a surprising visual effect. Use of the dairy particles is not, however, limited to incorporation as a dispersed or discontinuous phase in a dairy-based product as a continuous phase. The particles can in fact also be eaten as a product per se, where they can give a particular sensation of taste and/or texture owing to their specific shape and size.

The term "dairy particles" (also called "particles" below), as it is used in this context, refers to particles mainly consisting of dairy produce, i.e. consisting of at least 50 wt% dairy produce, such as, for example, milk, yoghurt, custard (or the Dutch equivalent "vla"), buttermilk, soft curd cheese (or the Dutch equivalent "kwark"), whey, cream and the like.

The term "dairy product", as used here, thus refers to any product that has been prepared from dairy produce, such as, for example, milk, yoghurt, custard (or "vla"), buttermilk, soft curd cheese (or "kwark"), whey, cream and the like. The dairy product represents a continuous phase, which can be liquid or viscous.

The dairy particles may also contain functional, possibly health-promoting, ingredients, such as, for example, vitamins, minerals, peptides and the like. Thus a product with a higher nutritional value is obtained.

The dairy particles may be in the shape of globules, flakes, strings, ovals, threads or any other arbitrary shape. The shape of the dairy particles depends on the way they are prepared, as described above. A suitable process of preparation is preparation of a composition of a dairy product and a gelling agent which gels on cooling, bringing the composition to a temperature at which the gelling agent is in a liquid state and preferably quick cooling of the composition to a temperature at which the gelling agent gels, so that the composition is in a gelled state. Globules can then be prepared, for example, by adding drops of the liquid composition (at a temperature at which the composition has not gelled and is thus liquid) of dairy product and gelling agent to a liquid cooling medium at the required low temperature. The liquid composition will then gel into the shape of drops (globules). Strings or threads can be prepared in a similar manner, for example by injecting the same mixture into a cooling medium, so that the composition gels in the form of strings.

The dairy particles are of such a size that they have a maximum volume of 5 cm³. In the case of strings, this means that they have, for example, a diameter of about 10 mm and a length of about 5 cm.

A solid form is understood in this case to mean that the particles containing gelling agent have a viscosity at a temperature above 0 °C which is sufficiently high that essentially no flowing of the particles occurs.

In the particles there needs to be at least one gelling agent that ensures that the particles are in solid form at a temperature above 0 °C (i.e. no flow or deliquescence takes place), so these can be stored at a temperature above 0 °C without deliquescing, hereinafter also called melting.

The upper limit of the storage temperature is of course dictated by the melting range of the gelling agent used in the dairy particles. This melting range depends among other things on the concentration used and the type of gelling agent and other components in the dairy particles, such as in some cases the presence or absence of cations. For instance, dairy particles containing gelatine, which has a melting range in the region of 20 - 30 °C, as gelling agent, will have to be stored at a temperature lower than 20 °C, preferably lower than 10 °C, preferably between 2 and 10 °C in order to prevent a change in shape or fusing of the particles. The choice of gelling agent to be used depends on the desired melting behaviour in the mouth, as will be explained later, and on the desired storage temperature of the dairy particles or the product comprising the dairy particles as dispersed phase. In general it can definitely be stated that the gelling agents used according to the invention, which gel on cooling, can be incorporated in products which need to be stored at refrigerator temperature, i.e. 2 - 7 °C. A large number of these gelling agents, with the exception of gelatine, can, moreover, also be used at ambient temperature (approximately 20 - 25 °C).

A person skilled in the art knows which gelling agent and what quantity of it is suitable for forming stable dairy particles which do not deliquesce at a temperature above 0 °C and this person will accordingly determine the correct gelling agent and the suitable quantity of it. Such information is known, for example, from the 'Handbook of Hydrocolloids', 2000, Woodhead Publishing Limited, Cambridge, United Kingdom and CRC Press LLC, Boca Raton, United States of America, ed. Philips and Williams, and 'Thickening and gelling agents for food', 1999, Aspen Publishers Inc., Gaithersburg, Maryland, United States of America, ed. Imeson.

The dairy particles are preferably in solid form at a temperature above 2 °C. Adopting 2 °C as the preferred lower limit of the storage temperature, indicates that the dairy particles as described here, as such or incorporated in a dairy product, are not frozen dairy particles, but particles in which the aqueous phase has been immobilised by a gelled gelling agent.

In a favourable embodiment according to the invention the dairy particles are in the form of globules (dairy globules). In this form they can easily be prepared, as will be explained below, and, moreover, globules give a pleasant feeling in the mouth and a special visual effect when incorporated in a continuous phase as a dispersed phase. The globules preferably have a diameter of 1 - 10 mm and even more preferentially a diameter of 2 - 5 mm. It has been found that particles of such a size can give a particularly suitable visual effect and also a particularly suitable sensation of colour, taste and/or texture. Furthermore, particles of such a size can be prepared relatively easily, as will be explained below.

The gelling agent is preferably a gelling agent which gels in solution on cooling, so that the particles can be relatively easily prepared by heating the composition of particles comprising the gelling agent, after which particles are formed from this composition which are cooled to form the particles in solid form, as will be explained below. A person skilled in the art is familiar with gelling agents which gel on cooling; see, for example, the references cited above.

In one embodiment the gelling agent is chosen from the group consisting of gelatine, starch, pectin, carragheenan (kappa or iota), alginate, gellan gum, agar, carob gum, xanthan gum, guar gum, or a combination of two or more thereof, such as carob gum and xanthan gum, or guar gum and xanthan gum. These gelling agents are regularly used in foods and are thus safe for consumers and all gel on cooling. A person skilled in the art can determine from experience the suitable quantity of gelling agent(s); see for example the abovementioned references. Depending on the gelling agent used, the concentration thereof and the remaining composition of the particles, they will be soft or firm.

A composition containing gelling agent, such as a dairy product with at least one gelling agent therein, will in general not have a strict temperature limit below which the composition assumes the gel form and above which the composition is liquid. Gelling often occurs within a larger or smaller temperature range. The extent of the range will depend on the quality of the gelling agent, the composition of the aqueous phase and the like. A similar consideration applies to the melting behaviour: instead of a sharply defined melting point, often a melting range will be observed.

In a preferred embodiment of the invention the gelling agent is gelatine because the melting temperature of a gelatine gel is such that particles prepared with it melt in the mouth (i.e. at 20 - 30 °C). The consumer will thus experience a particular sensation of taste with gelatine dairy particles, while the particles also meet the abovementioned requirements for the particles.

The dairy product is preferably yoghurt or custard, because it has been found that dairy particles prepared from yoghurt or custard are stable, have a long shelf life and/or can give a particular taste and/or colour effect.

The gelling agent is preferably present in the dairy particles in a quantity of 0.1 - 10 wt% of the dairy particles, because it has been found that with quantities of this kind particles are obtained with a firmness such that a pleasant feeling in the mouth is achieved.

In a practical embodiment the dairy product is present in the dairy particles in a quantity of at least 50, preferably at least 70, more preferentially at least 80 and most preferentially at least 90 wt% of the dairy particles. The dairy particles are suitably prepared by mixing the dairy product in question with a suitable quantity of gelling agent in solution, so that a gel with a firmness attractive to the consumer is obtained. The particle composition is thus easy to prepare simply by mixing the dairy product with (a solution of) the gelling agent.

The invention also relates to a product comprising a continuous dairy-based phase in which dairy particles according to the invention are dispersed. The continuous phase determines the nature of the product, which for this reason is referred to below as a dairy-based product. The terms "continuous phase" and "dairy-based product" are therefore interchangeable. The dairy-based product may be liquid, solid, viscous or airy; the latter product is a so-called mousse product or a beaten product with fine gas bubbles. Such a diary-based product containing dairy particles as dispersed phase advantageously has a surprising appearance, a surprising taste and/or a surprising texture and is judged by the consumer to be very pleasant and surprising.

The dairy-based product may be any dairy-based product, such as, for example, milk, yoghurt, custard, blancmange (or the Dutch equivalent "pudding"), cream, buttermilk, soft curd cheese, whey and the like. The dairy-based product may differ from the dairy product that is used for the preparation of the particles or may be identical to it. For the dairy-based product containing dairy particles it is important that the dairy particles incorporated as dispersed phase in the dairy-based product do not form sediment and are thus more or less uniformly distributed throughout the product.

For the dispersed phase (dairy particles) and continuous phase (dairy-based product) many combinations can be envisaged, including dispersed phase with low pH, for example based on yoghurt or buttermilk, and continuous phase with low pH, for example yoghurt or buttermilk; dispersed phase with low pH, for example based on yoghurt or buttermilk, and continuous phase with neutral pH, for example custard or blancmange; dispersed phase with neutral pH, for example based on custard, and continuous phase with low pH, for example yoghurt or buttermilk, or dispersed phase with neutral pH, for example based on custard, and continuous phase with neutral pH, for example custard or blancmange. Thus a whole range of products is possible, all of which are very attractive.

In a preferred embodiment of the invention the dairy-based product is a dairy dessert, because it has been found that especially in dessert systems ― which are appreciably more viscous than liquid products such as milk or buttermilk ― dairy particles do not form sediment and are thus more or less uniformly distributed throughout the product. The term "dairy dessert" is understood to mean all products based on dairy produce which normally serve as dessert, such as, for example, yoghurt, custard and blancmange.

In another embodiment of the invention the dairy-based product is yoghurt, custard or blancmange, because it has been demonstrated that in these systems the dairy particles are very uniformly distributed and do not form troublesome sediment for at least 14 days at 7 °C. Moreover, it is these very systems which are especially suitable as regards the sensation of taste and texture.

It has also been found that the firmness of the dairy particles in the product is influenced by the medium containing it. The examples included here show a correlation between the firmness measured with a texture analyser and the sensory assessment of the consistency of the dairy particles. It follows from this that the minimum firmness of the dairy particles in the dairy-based product corresponds to an initial gradient of approximately 20 g in a texture analysis measurement as described in Example 2. Depending on the personal preference of the consumer, firmer dairy particles can be prepared by the choice of the type and the dosage of the gelling agent. It is pointed out here that texture analysis alone can be used as long as there is no fracture of the dairy particles at a compression of 25 % compared with the original dairy particles.

It has been found that dairy particles in an acid medium with a pH < 6, for example yoghurt, remain firmer in comparison with the same particles in a non-acid medium with a pH > 6, for example custard. This is probably the result of coagulation of protein in the dairy particles by diffusion of acid from the yoghurt to the dairy particles. This is presumably the result of the fact that there is more free calcium available at a low pH (yoghurt) compared with the quantity of free calcium at neutral pH (custard). The LM pectin reacts with this free calcium, which results in a firm consistency.

The firmness of the dairy particles is further promoted by the use of carragheenan as gelling agent. It is known that carragheenan and protein react with one another in an acid environment, which leads to increased firmness.

The dairy-based product preferably contains 5 - 25 wt%, preferably 10 - 15 wt%, dairy particles. It has been found that the taste and possibly the colour of the particles are best expressed at this ratio of particles with respect to the dairy-based product.

The invention will be explained below by means of examples, which are in no way intended to be construed as limiting the scope of the invention in any way.

### EXAMPLES

### Example 1. Preparation of dairy globules with gelatine

Dairy globules were prepared by adding gelatine to an industrially prepared product. To this end a gelatine solution was prepared by adding 20 gram gelatine 240 Bloom (Biogel AG) to 80 g warm water. The 20 % gelatine solution prepared in this way was stirred and heated in a microwave oven until the solution became transparent. White custard ("Blanke vla", Campina, The Netherlands) was heated to 35 °C and 1 %, 2 % or 4 % gelatine was added using the 20 % solution. The mixture obtained in this way was dripped into a container of liquid nitrogen (-195 °C) with the aid of a pipette. In this way globules were formed. The globules were removed from the liquid nitrogen with the aid of a sieve and stored in a plastic container at -80 °C.

To add the globules to a dairy product the container was placed in a freezer at -18 °C a day before this addition. 10 g of particles were added to 90 g of chocolate custard (Campina, The Netherlands) and the mixture obtained in this way was carefully mixed with a spoon. After 5 days the prepared dairy products were submitted to sensory assessment (see table below).

| Base | Globules | % gelatine | Assessment |
|---|---|---|---|
| Chocolate custard | White custard | 1 | Very soft particles |
| Chocolate custard | White custard | 2 | Medium firmness |
| Chocolate custard | White custard | 4 | Firm particles |

### Example 2. Preparation of dairy globules with 3 different gelling agents

Dairy particles were prepared using three different gelling agents which gel on cooling. The recipe for the particles is shown in the table below.

| Mixture | Dosage in % | | |
|---|---|---|---|
| | 1 | 2 | 3 |
| Milk 3 % fat | 82 | 82 | 82 |
| Sugar | 13 | 13 | 13 |
| Starch | 1.6 | 1.6 | 1.6 |
| Cocoa powder 22/24 | 2.4 | 2.4 | 2.4 |
| Flavouring | 0.1 | 0.1 | 0.1 |
| Gelatine 240 Bloom | 1.3 | - | - |
| LM Pectin: Genupectin 101 AS (Brenntag specialties) | - | 1 | - |
| Carragheenan: Satiagel ADG 14 (Degussa) | - | - | 0.4 |

The dry ingredients were mixed and added to the milk. The products were pasteurised for 20 minutes at 92 °C and cooled to 60 °C. The liquids were dripped into liquid nitrogen with the aid of a pipette. In this way globules in solid form were formed. Mixture number 3, containing carragheenan, was inclined to gel prior to dripping. Therefore the temperature of this specific mixture was increased to 80 °C in order to prevent premature gelling. The globules were removed from the liquid nitrogen with the aid of a sieve and stored in a plastic container at -80 °C.

To add the globules to another product the container was placed in a freezer at a temperature of -18 °C a day before. Two products were prepared with each type of globule: custard and yoghurt with globules. 10 g of globules were added to 90 g of Campina vanilla whipped cream custard and 90 g of Campina full-fat yoghurt, respectively, and the product was carefully mixed with a spoon.

The firmness of the globules was determined experimentally by means of compression tests. The globules were sieved out of the surrounding medium (yoghurt, custard or no medium) after being stored for 7 days at 7 °C , briefly rinsed in cold water and again stored at 7 °C. The measurements were performed with a TA.XT2 compression test instrument (Stable Micro Systems Limited) by means of a uniaxial compression test. The test set-up was a cylinder, 20 mm high and 38 mm in diameter, with a flat bottom. For the measurement ten globules were placed under the set-up. The average diameter of the globules was approximately 4 mm. The circle within which the globules were placed was 25 mm. The temperature of the globules was 7 °C. The following settings were, moreover, of importance: mode: measure force in compression; option: return to start; speed pretest: 2 mm/s; speed test: 1 mm/s; distance: 75 %; temperature: 7 °C; trigger type: auto; trigger value: 5 g.

The globules were compressed to 25 % of the original volume. The required force in the course of time was recorded and plotted on a graph. A measure for the firmness is the gradient of the curve at the start of the test. In this experiment there was no fracture of the globules at 25 % relative compression. The initial gradient can therefore be expressed as force (g)/compression (-). The diameter of the globules was approximately 4 mm and therefore it can be assumed that the contact surface at a specific compression is of equal size. In the table below the initial gradient of the compression test of the globules after 7 days is given. This initial gradient is a measure for the firmness. As has already been stated above, the globules were stored at 7 °C without surrounding medium or in custard or yoghurt.

**Table: Measured value of the initial gradient of the graph (g), i.e. the force at 25 % relative compression (g) divided by the relative compression (25 %). The values are averages of 2 measurements.**

| Globules based on | No medium | Custard medium | Yoghurt medium |
|---|---|---|---|
| Gelatine | 84 | 51 | 86 |
| Pectin | 35 | 17 | 131 |
| Carragheenan | 49 | 26 | 254 |

The values in the table above correlate to the firmness of the globules.

By means of these tests it becomes clear that the firmness of the globules is influenced by the medium in which the globules are stored. The sensory assessment of the consistency of the globules which were tested coincides largely with the test results, as will be discussed below.

Based on these measurements it can be stated that the minimum firmness, measured according to the above process, corresponds to an initial gradient of approximately 20 g. Depending on the personal preference of the consumer, firmer globules can be prepared by the choice of the type and the dosage of the gelling agent as described in this patent application.

It should be noted that the above process can be used as long as there is no fracture of the globules at a compression of 25 % compared with the original globules.

The consistency of the globules was also submitted to sensory assessment in the medium itself. In vanilla whipped cream custard the globules with gelatine were assessed as firm in comparison with the globules with carragheenan and pectin. In yoghurt all the globules were assessed as firmer in comparison with the same globules in custard, which corresponds to the experimentally determined values for the firmness. This is probably the result of coagulation of the protein in the globules by diffusion of acid from the yoghurt into the globules. In yoghurt the globules based on pectin were relatively firm in comparison with the same globules in custard, this probably being the result of the fact that more free calcium is available at a low pH (yoghurt) in comparison with the quantity of free calcium at neutral pH (custard). The LM pectin reacts with this free calcium, which results in a firm consistency. The globules based on carragheenan were assessed as very firm in yoghurt. It is known that carragheenan and protein react with one another in an acid environment, leading to increased firmness. The globules containing gelatine were found to be softest in yoghurt.

## Claims

1. A process for the preparation of dairy particles which are in solid form at a temperature above 0 °C, comprising the following steps:
(a) preparing a composition of at least one dairy product and at least one gelling agent which gels in solution on cooling;
(b) bringing the composition to a temperature at which said gelling agent in dissolved form has not gelled;
(c) shaping and cooling dairy particles by bringing the composition wherein said gelling agent has not gelled into contact with a liquid cooling medium; and
(d) recovering the dairy particles.

2. The process according to Claim 1, wherein in step (c) a liquid cooling medium at a temperature of 0 °C or lower is used.

3. The process according to Claim 1 or 2, wherein the liquid cooling medium is nitrogen.

4. The process according to one of the preceding claims, wherein bringing the composition into contact with the liquid cooling medium in step (c) is carried out discontinuously.

5. The process according to Claim 4, wherein bringing into contact discontinuously takes place by dripping or injecting the composition into the liquid cooling medium.

6. Dairy particles obtainable by the process according to one of the preceding claims, containing at least one dairy product, wherein there is at least one gelling agent in the dairy particles and the dairy particles are in solid form at a temperature above 0 °C.

7. Dairy particles according to Claim 6, wherein the dairy particles are in solid form at a temperature above 2 °C.

8. Dairy particles according to Claim 6 or 7, wherein the dairy particles are in the form of globules.

9. Dairy particles according to one or more of Claims 6 - 8, wherein the gelling agent is chosen from the group consisting of gelatine, starch, pectin, carragheenan (kappa or iota), alginate, gellan gum, agar, carob gum, xanthan gum, guar gum, or a combination of two or more thereof.

10. Dairy particles according to Claim 9, wherein the gelling agent is gelatine.

11. Dairy particles according to any one of Claims 6 - 10, wherein the dairy product is yoghurt or custard.

12. Dairy particles according to any one of Claims 6 - 11, wherein the gelling agent is present in a quantity of 0.1 - 10 wt% of the dairy particles.

13. Dairy particles according to any one of Claims 6 - 12, wherein the dairy product is present in a quantity of at least 50, preferably at least 70, more preferentially at least 80 and most preferentially at least 90 wt% of the dairy particles.

14. Product comprising a continuous phase based on dairy produce in which dairy particles according to one or more of Claims 6 - 13 are dispersed.

15. Product according to Claim 14, wherein the continuous phase is a dairy dessert.

16. Product according to one of Claims 14 or 15, wherein the continuous phase is yoghurt, custard or blancmange.

17. Product according to any one of Claims 14 - 16 containing 5 - 25 wt%, preferably 10 - 15 wt% dairy particles.
